# EUROPÄISCHE PATENTSCHRIFT

(11) **EP 2 479 727 B1**
(45) Veröffentlichungstag und Bekanntmachung des Hinweises auf die Patenterteilung: **19.08.2015**
(21) Anmeldenummer: 11450009.3
(22) Anmeldetag: 21.01.2011
(51) Int. Cl.: G07C 15/00

(54) **Kugelziehungsautomat mit Kugelführung**
Ball drawing machine with ball guide
Dispositif de tirage de boules avec guide de boules

(43) Veröffentlichungstag der Anmeldung: 25.07.2012
(73) Patentinhaber: Novomatic AG, 2352 Gumpoldskirchen (AT)
(72) Erfinder: Polleres, Wolfgang, 2352 Gumpoldskirchen (DE)
(74) Vertreter: Wildhack & Jellinek

(56) Entgegenhaltungen:
- CN-A- 101 561 946
- JP-A- 8 280 902
- JP-A- 2002 085 745
- JP-A- 2004 081 825
- JP-A- 2005 065 834
- JP-A- 2007 037 829
- JP-A- 2008 246 237
- US-A1- 2004 256 800
- US-A1- 2006 196 488
- US-B1- 7 775 521

## Beschreibung

Die Erfindung betrifft einen Kugelziehungsautomaten mit einer Kugelführung gemäß dem Oberbegriff des Patentanspruchs 1.

### Gebiet der Erfindung

Erfindungsgemäße Vorrichtungen werden insbesondere im Bereich der automatisierten Ziehung von Kugeln zur Zufallszahlenerzeugung im Rahmen von Glücksspielen, etwa Bingo oder Lotterien, eingesetzt.

### Hintergrund der Erfindung

Hintergrund der Erfindung sind Kugelziehungsgeräte bzw. Kugelziehungsautomaten. Derartige Geräte und Automaten dienen zum Ermitteln von Gewinnzahlen, beispielsweise für das Bingospiel sowie für sonstige Lotteriespiele. Ein bekanntes Kugelziehungsgerät weist eine in hohlen Achsstummeln gelagerte, nach zwei Richtungen um ihre Achsen drehbare, vorzugsweise aus einer durchsichtigen Hohlkugel bestehende Ziehungstrommel auf, in welcher eine mehr oder weniger hohe Anzahl von mit Ziffern versehenen Kugeln durch den Achsstummel eingebracht, beim Drehen der Ziehungstrommel nach der einen Richtung gemischt und beim Drehen der Ziehungstrommel nach der anderen Richtung durch den anderen hohlen Achsstummel unter Zuhilfenahme einer Ausgabevorrichtung nacheinander zur Ausgabe gebracht werden, wobei die Ausgabevorrichtung eine vom inneren Rand der Ziehungstrommel bis zu dem Ausgabestummel reichende schraubenförmige Rinne aufweist, die von den von der Rinne aufgenommenen Kugeln die jeweils vorderste Kugel der Ausgabevorrichtung zuführt. Zur Abfuhr der Kugeln zu einer Erkennungsvorrichtung werden die Kugeln mittels einer Kugelführung mit einem Gestänge geführt.

Ein weiteres bekanntes Kugelziehungsgerät weist eine Kugelführung auf, die eine mittels sich in Bahnrichtung erstreckenden Gestänge definierte Kugelbahn aufweist.

Im Stand der Technik ist auch eine Vielzahl unterschiedlicher Verfahren und Vorrichtungen bekannt, mit denen Zufallszahlen gezogen werden können. Viele dieser Systeme verfügen über längere Kugelführungen, die dem Spieler einen optischen Anreiz bieten sollen und zur Durchführung weiterer Spiele motivieren sollen. Insbesondere ist es bekannt, Kugeln zur Ziehungstrommel über Kugelführungen hinzuführen bzw. die Kugeln nach der Ziehung über eine Kugelführung von der Ziehungstrommel abzuführen.

Dokument CN101561946 offenbart einen Kugelziehungsautomaten mit einer spiralförmigen Kugelführung, in der die Kugeln mittels eines Gestänges geführt werden.

Bei längeren Kugelführungen, insbesondere dann, wenn die Kugelführung zusätzlich gekrümmt ist, kann das Problem auftreten, dass einzelne Kugeln in der Kugelführung stecken bleiben können.

Grundsätzlich besteht dieses Problem bei Kugelführungen, wobei in bestimmten Situationen, insbesondere wenn die Kugelbahn einen eng gewundenen oder schraubenförmigen Verlauf aufweist, der Fall eintreten kann, dass die Kugeln im Verlauf der Kugelbahn an Geschwindigkeit verlieren können und sogar stecken bleiben können. Ein derartiger Fall führt dazu, dass das jeweilige Glücksspiel angehalten werden muss und eine allenfalls vorhandene Abdeckung abgenommen werden muss. Ein Wartungsmitarbeiter muss die steckengebliebene Kugel aus dem Kugelziehungsgerät befreien und das Spiel von neuem starten, weiters muss das wieder verschlossene Gerät von autorisierter Stelle neu versiegelt werden.

Ein solcher Vorfall hat zur Folge, dass zusätzlicher Wartungsaufwand erforderlich ist und dass das jeweilige Kugelziehungsgerät während der Wartungsarbeiten stillsteht und der Betreiber des Automaten weniger Spiele durchführen kann. Falls während des Spielverlaufs, etwa an einem Abend, mehrere Kugeln stecken bleiben, kann dies bei einer hohen Anzahl von Spielern für den Automatenbetreiber zu durchaus beträchtlichen Einnahmenverlusten führen. Zusätzlich kann bei den Spielern der Eindruck entstehen, dass sie vom Betreiber des Automaten betrogen werden bzw. dass Manipulationen durch den Betreiber stattfinden.

Um das Steckenbleiben von Kugeln in Spielautomaten zu verhindern, werden im Stand der Technik, beispielsweise in den Dokumenten JP 8 280902, JP 2008 246237 und JP 2005 06583, Vibrationsgeber verwendet, die die Kugelführung in Vibrationen versetzen. Dokument US 2006/196488 offenbart ein Gerät zur Ausgabe von Tennisbällen, das eine Ausgaberöhre und einen Vibrationsgeber aufweist.

Die Aufgabe der Erfindung liegt darin, das Steckenbleiben einzelner Kugeln zu verhindern und einen Kugeiziehungsautomaten zur Verfügung zu stellen, bei dem eine störungsfreie Weiterleitung bzw. Durchführung von Kugeln möglich ist.

Die Erfindung löst diese Aufgabe bei einem Kugelziehungsautomaten der eingangs genannten Art mit den Merkmalen des Kennzeichens des Patentanspruchs 1.

### Zusammenfassung der Erfindung

Bei der Kugelführung eines solchen Kugelziehungsautomaten ist einem Körper zur Aufnahme und Führung von Kugeln einer vorgegebenen Größe entlang eines vom Körper definierten vorgegebenen Wegs zumindest ein Vibrationsgeber zugeordnet, der mit dem Körper schwingungsübertragend verbunden ist. Hierdurch können wirksam im Körper steckengebliebene Kugeln freigerüttelt und ein Steckenbleiben der Kugeln im Körper verhindert werden.

Eine besonders einfache Führung der Kugeln sowie eine zusätzliche Verbesserung der Laufeigenschaften der Kugeln wird erfindungsgemäß erreicht, indem der Körper eine Anzahl von entlang des vorgegebenen Wegs verlaufenden, zueinander beabstandeten, insbesondere parallelen und/oder gekrümmten, Führungsstangen aufweist, die den vorgegebenen Weg derart umgeben, dass zwischen den Führungsstangen eine Kugel der vorgegebenen Größe entlang des vorgegebenen Wegs führbar ist.

Zur Erhöhung der mechanischen Stabilität der Kugelführung ist erfindungsgemäß vorgesehen, dass die Führungsstangen parallel zueinander verlaufen und den vorgegebenen Weg festlegen.

Die Stabilität wird erfindungsgemäß weiter erhöht, indem die Führungsstangen an einer Anzahl von längs des vorgegebenen Wegs vorgegebenen, insbesondere gleichmäßig, entlang des vorgegebenen Wegs beabstandeten Positionen durch Querverbindungen zueinander festgehalten sind, wobei die Querverbindungen vorzugsweise eine zentrale Ausnehmung zur Durchführung einer Kugel aufweisen.

Zur verbesserten Übertragung der Vibrationen auf die Kugelführung ist erfindungsgemäß vorgesehen, dass der Vibrationsgeber mit einer Strebe, insbesondere aus Metall, schwingungsübertragend verbunden, insbesondere verschraubt ist und dass die Strebe mit dem Körper, insbesondere mit einer der Führungsstangen oder einer der Querverbindungen, verbunden, insbesondere verschraubt, ist und diese durchsetzt.

Eine besonders einfache Ausbildung einer Kugelführung kann erreicht werden, wenn der Vibrationsgeber durch einen Exzentermotor oder Unwuchtmotor ausgebildet ist, wobei vorzugsweise an der Achse des Exzentermotors oder Unwuchtmotors an dessen Abtriebswelle ein Extentergewicht angeordnet ist.

Die Erfindung betrifft einen Kugelziehungsautomaten umfassend eine, insbesondere als Ziehungstrommel ausgebildete, Ziehungseinheit zur Aufnahme und zufälligen Auswahl von Kugeln sowie zumindest eine Kugelführung zur Abführung von gezogenen Kugeln aus der oder zur Zuführung von Kugeln zur Ziehungseinheit.

Dieser Kugelziehungsautomat weist den wesentlichen Vorteil auf, dass gezogene Kugeln weniger häufig in den Kugelführungen stecken bleiben.

Zur verbesserten Übertragung der Schwingungen und zur damit einhergehenden Verringerung der Wahrscheinlichkeit, dass Kugeln in der Kugelführung stecken bleiben, kann vorgesehen sein, dass der Vibrationsgeber oder der Schwingteil des Vibrationsgebers mit zumindest einer der Führungsstangen oder einer der Querverbindungen schwingungsübertragend verbunden ist.

In einem weiteren Beispiel kann vorgesehen sein, dass der Körper röhrenförmig und insbesondere durchsichtig ausgebildet ist und vorzugsweise aus durchsichtigem Kunststoff besteht, wobei der Weg im Inneren des Körpers verläuft. Hierdurch können Kugeln besonders einfach und ohne steckenzubleiben geführt werden.

Zur Verringerung der Belastung der Vibrationseinheit sowie zur Verlängerung der Lebensdauer der Vibrationseinheit kann vorgesehen sein, dass eine Einheit zur Feststellung einer in der Kugelführung steckengebliebenen Kugel vorgesehen ist, wobei die Einheit bei Feststellung einer steckengebliebenen Kugel den Vibrationsgeber aktiviert.

Weiters kann zur Verringerung des Energiebedarfs sowie zur Erhöhung der Wirksamkeit des Vibrationsgebers vorgesehen sein, dass der Vibrationsgeber auf eine Frequenz eingestellt ist, die der Resonanzfrequenz der Kugelführung entspricht. Hierdurch werden die durch die Vibration erzeugten Geräusche weitestgehend vermieden bzw. beträchtlich verringert.

Eine Ausführungsform der Erfindung wird anhand der folgenden Zeichnungen ohne Einschränkung des allgemeinen erfinderischen Gedankens näher dargestellt.

### Figurenbeschreibung

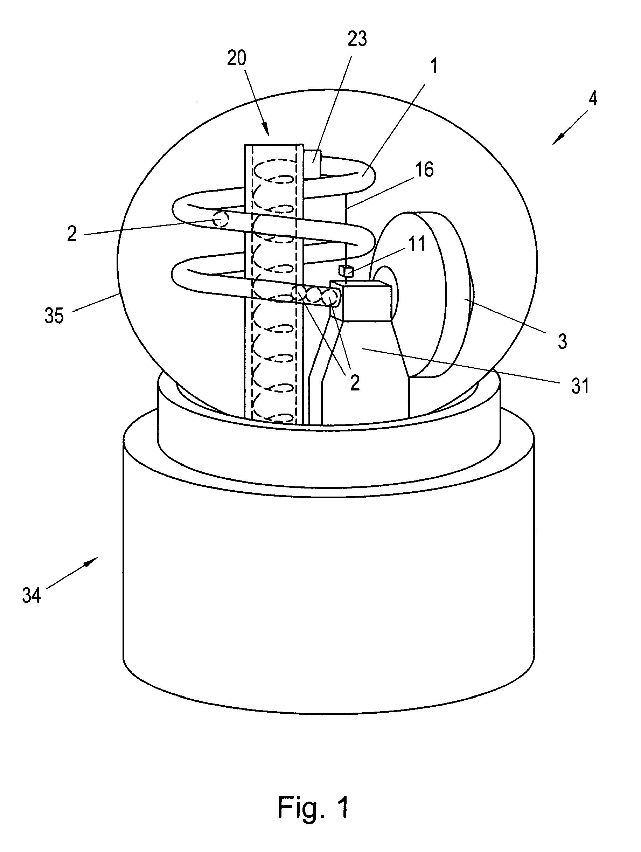

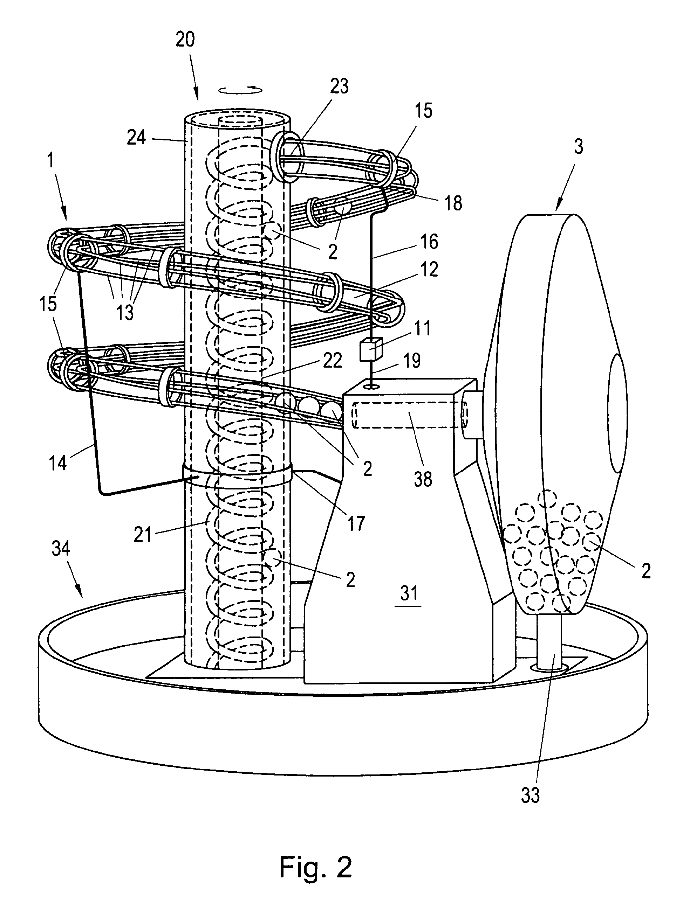

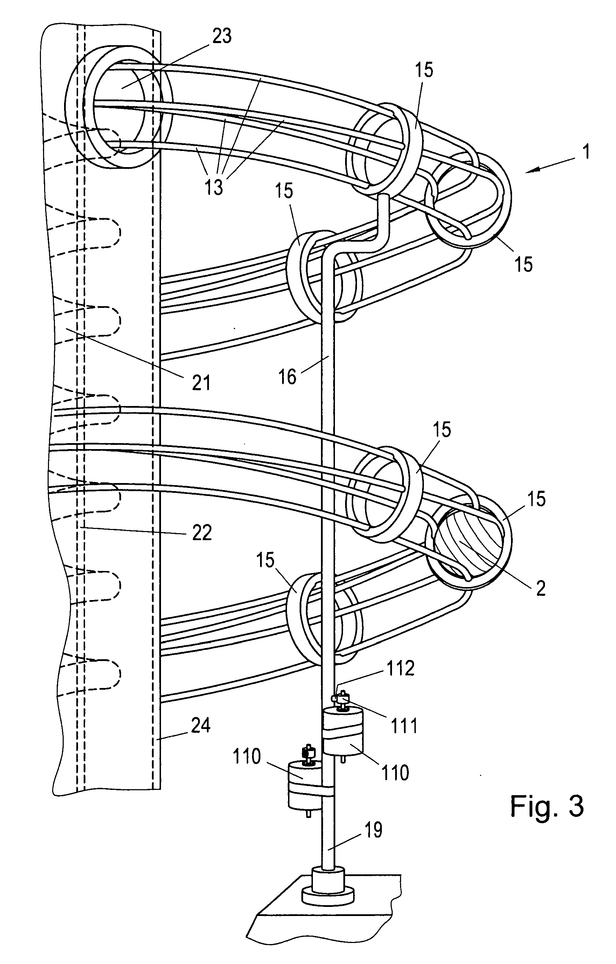

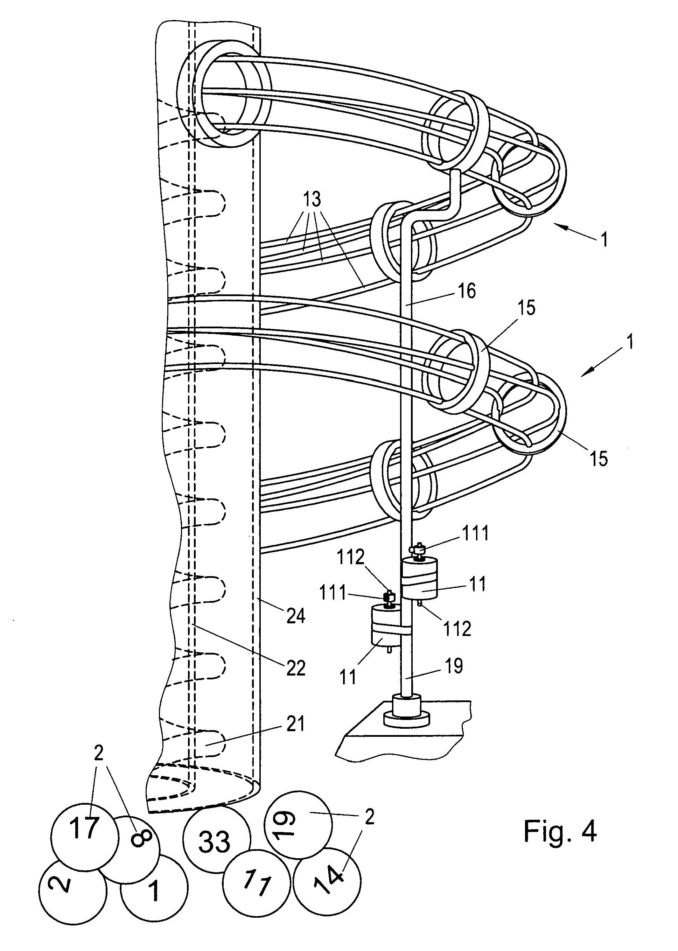

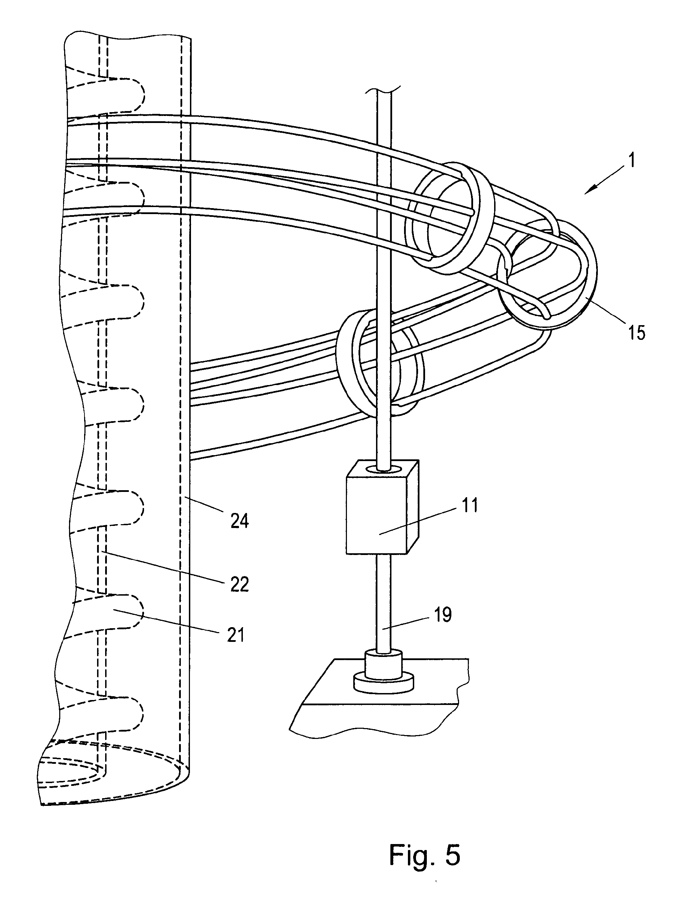

Fig. 1 zeigt einen Kugelziehungsautomaten. Fig. 2 zeigt ein Detail des in Fig. 1 dargestellten Kugelziehungsautomaten. Fig. 3 und 4 zeigen im Detail die auf dem Kugelziehungsautomaten montierten Vibrationsgeber. Fig. 5 zeigt die Verbindung des Vibrationsgebers mit der Kugelführung.

### Beschreibung einer bevorzugten Ausführungsform der Erfindung

Fig. 1 zeigt einen Kugelziehungsautomaten 4 zur Ziehung von Kugeln 2 für ein Bingospiel. Im vorliegenden Fall handelt es sich um eine Automatenanordnung 4 mit einem Sockel 34 sowie einem auf dem Sockel 34 aufgebauten Kugelziehungsautomaten. Rund um den Kugelziehungsautomaten ist eine sphärische Glashülle als Abdeckung 35 angeordnet, die den unmittelbaren Zugriff eines Spielers auf den Kugelziehungsautomaten verhindert. Die Glashülle ist im vorliegenden Fall ist transparent ausgebildet. Dies hat insbesondere den Vorteil, dass die Kugelziehungsanordnung bzw. Automatenanordnung 4 zentral in Räumen aufgestellt bzw. angeordnet werden kann und dass einzelne Spieler rund um die Automatenanordnung 4 Aufstellung nehmen können. Alternativ kann Glashülle auch zumindest teilweise opak bzw. undurchsichtig ausgebildet sein, wobei vorteilhafterweise die Sicht auf die wesentlichen Teile des Spielautomaten frei ist.

Diese Abdeckung 35 ist im vorliegenden Fall sphärisch ausgebildet, aufgrund ihres wesentlichen Zwecks, den Automaten vor dem Zugriff von Spielern zu schützen, kann jedoch jede beliebige andere Form, etwa auch eine zylindrische Form oder eine Kegelform gewählt werden, solange der Zugriff einzelner Spieler auf den Kugelziehungsautomaten verhindert wird.

Fig. 2 zeigt den in Fig. 1 dargestellten Kugelziehungsautomaten im Detail, wobei die in Fig. 1 dargestellte sphärische Abdeckung 35 in Fig. 2 nicht dargestellt ist.

Fig. 2 zeigt einen auf dem Sockel 34 angeordneten Kugelziehungsautomaten umfassend einen Lager- und Stützteil 31, der mit dem Sockel 34 fest verbunden ist und auf diesem aufsitzt. Der Lager- und Stützteil 31 dient zur Lagerung einer als Ziehungstrommel ausgebildeten Ziehungseinheit 3. Die Ziehungstrommel bzw. Ziehungseinheit 3 ist um eine horizontal verlaufende Achse gegenüber dem Lager- und Stützteil 31 drehbar gelagert. In der Ziehungseinheit 3 befindet sich eine Anzahl von Kugeln 2. Die Ziehungseinheit 3 bzw. die Ziehungstrommel wird durch einen im Lager- und Stützteil 31 befindlichen, nicht dargestellten Motor angetrieben und vollführt eine Drehung um ihre Lagerachse.

Die Kugeln 2 werden im Zuge dieser Drehung im Inneren der Ziehungstrommel wahllos durcheinandergewirbelt, wobei nach einer Anzahl von Umdrehungen eine gewisse Zufälligkeit der Anordnung der Kugeln 2 entsteht. Die Kugeln 2 werden in der Ziehungseinheit 3 gemischt. Die Ziehungseinheit 3 weist einen Auslass 33 bzw. eine Ausgabeöffnung 33 auf, über den nach einer bestimmten Anzahl von Drehungen Kugeln 2 aus dem Inneren der Ziehungstrommel bzw. Ziehungseinheit 3 entnehmbar sind. Für die Ausbildung derartiger Ziehungstrommeln bzw. Ziehungseinheiten 3 besteht eine Vielzahl unterschiedlicher Möglichkeiten, die aus dem Stand der Technik wohl bekannt sind. Im Zuge der Erfindung können sämtliche beliebigen Ausprägungen von Ziehungstrommeln verwendet werden, mit denen die Kugeln 2 gemischt werden und anschließend eine einzelne Kugel 2 zufällig aus der Menge der insgesamt vorliegenden Kugeln 2 ausgewählt wird.

Die Kugel 2 wird durch einen hohlen Auslass bzw. Ausgabestummel 33 nach unten in den Sockel 34 der Automatenanordnung 4 befördert und in einer nicht dargestellten Aufnahmeeinheit aufgezeichnet, wobei automatisiert die jeweilige Aufschrift der Kugel, insbesondere eine Zahl, ermittelt wird. Gegebenenfalls kann auch die Farbe der Kugel sowie die Form der auf der Kugel aufgedruckten Bezeichnungen ermittelt werden. Die Kugel 2 wird gegebenenfalls gefilmt, wobei aufgrund gesetzlicher Vorschriften den Spielern die aufgezeichneten Bilder der Kugeln aus dem Bereich des Sockels 34 auf einem Monitor dargestellt werden.
Nach der Auswertung und Darstellung der gezogenen Kugel 2 wird diese über eine Hebevorrichtung 20 nach oben gehoben und läuft über eine Kugelführung 1 wieder bis zum Bereich des Lager- und Stützteils 31.

Die Hebevorrichtung 20 umfasst eine äußere zylindrische Abdeckung 24 aus durchsichtigem Material, eine Hubschraube 21 mit senkrecht ausgerichteter Schraubenachsrichtung, die von einem im Bereich des Sockels 34 befindlichen, Motor (in der Fig. nicht näher dargestellt) um ihre Schraubenachse drehend angetrieben wird. Im Inneren der schraubenförmige Hebevorrichtung 21 schließt eine innere zylindrische Abdeckung 22 an, die fest mit der schraubenförmigen Hebevorrichtung 21 verbunden ist.

Eine Kugel 2 gelangt nach ihrer Ziehung in der Ziehungstrommel 3 und ihrer Erfassung bzw. Aufnahme im nicht dargestellten Bereich des Sockels 34 in den unteren Bereich der Hebevorrichtung 20 und wird zwischen der Hubschraube 21, der äußeren zylindrischen Abdeckung 24 und der inneren zylindrischen Abdeckung 22 gelagert. Die drehende Hubschraube 21 befördert die Kugel 2 nach oben. Die Kugel 2 ist dabei für die Spieler ein weiteres Mal sichtbar. Am oberen Ende der Hebevorrichtung 20 ist ein Auslass 23 vorgesehen, durch den die einzelnen Kugeln in eine Kugelführung 1 gelangen. Am oberen Ende der Hubschraube 21 befindet sich ein nach außen abstehendes Abschlussstück, das die Kugel 2 in einen am oberen Ende des Mantels der äußeren zylindrischen Abdeckung 24 der Hebevorrichtung 20 befindlichen Auslass 23 stößt bzw. lenkt.

Alternativ zu der dargestellten Hebevorrichtung 20 kann jedoch auch eine beliebige andere Hebevorrichtung verwendet werden, die die jeweilige Kugel 2 nach ihrer Detektion im Bereich des Sockels 34 nach oben hebt. Am oberen Ende weist die Hebevorrichtung 20 jeweils einen Auslass 23 auf, an den eine Kugelführung angeschlossen ist.

Die Kugelführung 1 ist in dieser bevorzugten Ausführungsform der Erfindung schraubenförmig rund um die Hebevorrichtung 20 angeordnet. Ein Ende der Kugelführung 1 ist mit dem Auslass 23 der Hebevorrichtung 20 verbunden, das entgegengesetzte Ende der Kugelführung 1 mündet in eine durch den Lager- und Stützteil 31 verlaufende durchgängige Ausnehmung 38. Der Lager- und Stützteil 31 weist im Bereich der Einmündung der Kugelführung 1 eine durchgehende Ausnehmung 38 auf, die entlang der Drehachse der Ziehungseinheit 3 verläuft und in die Ziehungseinheit 3 einmündet. Diese durchgängige Ausnehmung 38 ist so groß ausgebildet, dass eine Kugel 2 durch sie hindurch rollen bzw. gleiten kann. Vorteilhafterweise ist am Lager- und Stützteil 31 eine nicht dargestellte Einlasssperre vorgesehen, die verhindert, dass während des Spiels Kugeln 2 von der Kugelführung 1 in die Ziehungstrommel 3 laufen. Die Kugelführung 1 ist in diesem Fall entsprechend lang dimensioniert, so dass eine gewisse Anzahl an Kugeln 2 gespeichert werden können. Gegebenenfalls kann auf diese Art verhindert werden, dass eine Kugel 2 während desselben Spiels zwei Mal gezogen wird. Falls durch die Spielregeln gefordert ist, dass eine Kugel 2 auch mehrfach während eines Spiels gezogen werden kann, kann die Einlasssperre unterbleiben oder ständig geöffnet sein.
Nach Ablauf des Spiels kann die Einlasssperre geöffnet werden, sodass sämtliche gezogenen Kugeln wieder in den Innenbereich der Ziehungstrommel 3 einlaufen können.

In dieser vorteilhaften Ausgestaltung der Erfindung ist der Mündungsteil der Kugelführung 1 in den Lager- und Stützteil 31 bzw. in die Ziehungstrommel 3 durch ein stärkeres Gefälle gekennzeichnet als die übrigen Abschnitte der Kugelführung 1, sodass die Kugeln 2 nach Abschluss eines Spiels bei Öffnung der Einlasssperre jedenfalls zurück in die Ziehungstrommel 3 einlaufen können.

Die Kugelführung 1 weist einen Körper 10 zur Aufnahme und Führung von Kugeln 2 der vorgegebenen Größe auf, wobei durch den Körper 10 ein vorgegebener Weg 12 definiert wird, entlang dem die Kugeln im Zuge ihrer Bewegung laufen. Der Weg 12 ist im wesentlichen schraubenförmig ausgebildet, wobei derjenige Weg, den der Schwerpunkt bzw. Mittelpunkt einer Kugel 2 durch die Kugelführung 1 nimmt, in Fig. 2 strichliert dargestellt ist. Der Körper 10 der Kugelführung umfasst eine Anzahl von entlang des vorgegebenen Wegs 12 verlaufenden und zueinander beabstandeten parallel verlaufenden Führungsstangen 13. Im vorliegenden Fall sind die Führungsstangen 13 gekrümmt und spiralenförmig und verlaufen vom Auslass 23 der Hebeeinrichtung 20 bis zum Lager- und Stützteil 31. Die einzelnen Führungsstangen 13 sind derart beabstandet, dass zwischen ihnen eine Kugel 2 der vorgegebenen Größe hindurch laufen kann, wobei jedoch sichergestellt wird, dass die Kugel 2 nicht zwischen jeweils zwei Führungsstangen 13 hindurchfällt.

In dieser bevorzugten Ausführungsform ist der vorgegebene Weg 12 so gewählt, dass eine am Auslass 23 der Hebevorrichtung 20 losgelassene Kugel 2 allein durch Schwerkraft bis zum Lager- und Stützteil 31 am Ende der Kugelführung 1 ohne zusätzliche äußere Impulse laufen kann. Die Führungsstangen 13 sind in vorgegebenen Abständen von Querverbindungen 15 in einer vorgegebenen Distanz zueinander gehalten. Die Querverbindungen 15 weisen in dieser besonderen Ausführungsform eine Ringform auf, wobei die Querverbindungen Ausnehmungen aufweisen, durch die die jeweiligen Führungsstangen 13 hindurchgeführt sind. Die Führungsstangen sind im Bereich dieser Ausnehmungen mit den Querverbindungen 15 verbunden. Sämtliche Querverbindungen haben in dieser konkreten Ausgestaltung der Erfindung dieselbe Form.

Die Kugelführung 1 ist mittels Stützstangen 14 auf dem Sockel 34 bzw. auf der Hebevorrichtung 20 abgestützt. Die Kugelführung 1 ist mit einer weiteren Stützstange bzw. Strebe 16 am Lager- und Stützteil 31 abgestützt. Alternativ kann die weitere Stützstange 16 oder Strebe 16 auch auf dem Sockel 34 oder auch auf der Hebeeinrichtung 20 abgestützt sein. Auf der weiteren Stützstange 19 ist ein Vibrationsgeber 11 angeordnet. Der Vibrationsgeber 11 ist über eine Strebe 16 schwingungsübertragend mit dem Körper 10 verbunden. Die Strebe 16 ist im vorliegenden Fall ausgestaltet wie die Stützstangen 14, und besteht in dieser besonderen Ausführungsform aus einem hohlen Metallrohr. Die Strebe 16 greift an einer vorgegebenen Position 18 an einer der Querverbindungen 15 an und überträgt auf vorteilhafte Weise die vom Vibrationsgeber 11 erzeugten Vibrationen auf den Körper 10 der Kugelführung 1, somit auf die Führungsstangen 13 sowie die Querverbindungen 15. Durch die Fortpflanzung der Vibrationen in den Führungsstangen 13 wird die gesamte Kugelführung 1 in mechanische Schwingungen versetzt. Falls eine Kugel 2 zwischen zwei Führungsstangen 13 oder zwischen zwei Führungsstangen 13 und einer Querverbindung 15 steckengeblieben ist, kann die Kugel 2 aus ihrer Position losgerüttelt und entlang des vorgegebenen Wegs 12 weitergeführt werden.

In einem weiteren Beispiel kann auch die Kugelführung 1 bzw. deren Körper 10 röhrenförmig aus durchsichtigem Kunststoff ausgebildet werden. Dann kann die Strebe 16 mit dem Körper 10 unmittelbar mechanisch verbunden, etwa verschraubt oder verklebt sein.

Zur Verringerung der Gefahr, dass Kugeln 2 im Zuge ihrer Bewegung durch die Kugelführung 1 stecken bleiben, sieht die Erfindung nunmehr vor, dass zumindest ein Vibrationsgeber 11 vorgesehen ist, der mit dem Körper 10 schwingungsübertragend verbunden ist. In dieser besonderen Ausführungsform der Erfindung ist der Vibrationsgeber 11 in einem Gehäuse angeordnet, das mittels der Strebe schwingungsübertragend mit einer Querverbindung 15 des Körpers 10 verbunden ist. Die Schwingungen des Vibrationsgebers 11 können somit direkt vom Vibrationsgeber 11 über die Strebe 16 auf die Querverbindungen und über diese auf die Führungsstangen 13 übertragen werden, sodass verklemmte Kugeln 2 rasch freigerüttelt werden können.

Im Gehäuse des Vibrationsgebers 11 befinden sich in dieser vorteilhaften Ausgestaltung der Erfindung zwei Elektromotoren 110 mit jeweils einer Motorwelle 112. Auf der Motorwelle 112 ist ein Exzentergewicht 111 angeordnet, dessen Massemittelpunkt nicht auf der Achse der Motorwelle 112 des Elektromotors 110 liegt. Im folgenden wird der durch Anordnung eines Exzentergewichts 111 in seinen Schwingungseigenschaften modifizierte Elektromotor 110 als Exzentermotor oder Unwuchtmotor 110 bezeichnet. Wie in Fig. 3 dargestellt, sind die beiden Exzentermotoren oder Unwuchtmotoren 110 über Verbindungselemente, etwa Kabelbinder, mit der Strebe 16 verbunden. Alternativ können die beiden Exzentermotoren 110 auch mit der Strebe 16 verschraubt sein.

Alternativ zu der in Fig. 3 dargestellten Anordnung mit zwei Extentermotoren 110 kann auch ein einziger Exzentermotor 110 verwendet werden, der eine entsprechend große Vibrationsenergie auf die Strebe 16 und somit auf die Kugelführung 1 überträgt.

Alternativ kann anstelle des Vibrationsgebers auch dessen schwingender Teil, etwa dessen Exzentergewicht schwingungsübertragend mit der Strebe 16 und somit mit der Kugelführung 1 verbunden sein. Die Strebe 16 kann, wie bereits erwähnt, entweder an einer der Querverbindungen 15 oder aber auch an einer der Führungsstangen 13 schwingungsübertragend angeschlossen sein. Insbesondere kann für das Angreifen der Strebe 16 eine Stelle derart ausgesucht werden, dass ein möglichst großer Anteil der Kugelführung 1 in Vibration versetzt wird.

Um eine verbesserte Vibration der gesamten Kugelführung bzw. des gesamten Kugelziehungsautomaten zu erreichen, wird in dieser bevorzugten Ausführungsform der Erfindung die Vibrationsfrequenz des Vibrationsgebers auf die Resonanzfrequenz fR der Kugelführung eingestellt. Die Einstellung erfolgt vorteilhafterweise in einem vor dem Spielbetrieb stattfindenden Kalibrierungsschritt. Dabei wird der Vibrationsgeber 11 auf eine vorgegebene Unterfrequenz eingestellt, wobei die Frequenz schrittweise erhöht wird. Je stärker die Kugelführung 1 bzw. der Kugelziehungsautomat 4 durch den Vibrationsgeber 11 in Schwingung versetzt werden, umso größer sind die Resonanzeigenschaften bei der jeweiligen Frequenz. Es kann beispielsweise eine Schwingungsmessvorrichtung an einer beliebigen Position der Kugelführung 1 angeordnet werden und anschließen überprüft werden, bei welcher eingestellten Vibrationsfrequenz die Kugelführung bzw. der Kugelziehungsautomat 4 die größte Schwingungsamplitude aufweist. Die Vibrationsfrequenz des Vibrationsgebers wird innerhalb eines vorgegebenen Frequenzbereichs etwa zwischen 10 Hz und 1000 Hz variiert und diejenige Frequenz gesucht, bei der Resonanz am größten ist.

Zur Einstellung der Vibrationsfrequenz kann bei der in Fig. 3 dargestellten Ausführungsform die Motordrehzahl des jeweiligen Exzentermotors oder Unwuchtmotors 110 variiert werden. Die Vibrationsfrequenz entspricht im vorliegenden Ausführungsbeispiel exakt der Motordrehzahl.

Die vorliegende besondere Ausführungsform der Erfindung umfasst weiters eine nicht dargestellte Einheit, die zur Feststellung einer in der Kugelführung 1 steckengebliebenen Kugel 2 ausgebildet ist. Ist eine Kugel 2 in der Kugelführung 1 steckengeblieben, gibt die Einheit ein Signal ab, das den Vibrationsgeber 11 aktiviert. Die Einheit überprüft während der Bewegung der Kugel 2 in der Kugelführung 1, ob eine Kugel in der Kugelführung 1 steckengeblieben ist. Im Falle des Steckenbleibens der Kugel 2 in der Kugelführung 1 wird die Kugelführung 1 in Vibration oder Schwingung versetzt.

Die Einheit kann auf unterschiedlichste Art und Weise ausgebildet sein. Insbesondere kann vorgesehen sein, dass im Bereich des Auslasses 23 der Hebevorrichtung 20 sowie im Endbereich der Kugelführung 1, also etwa im Bereich des Lager- und Stützteils 31, jeweils eine Lichtschranke vorgesehen ist, die aktiviert wird, sobald eine Kugel die Lichtschranke durchquert. Die Lichtschranke ist vorteilhafterweise in einer der Querverbindungen 15 angeordnet. Wenn eine Kugel 2 die im Bereich des Auslasses 23 befindliche Lichtschranke passiert, so passiert dieselbe Kugel 2 nach einer vorgegebenen, insbesondere durch die Länge der Kugelführung vorgegebenen, Zeit die am Ende der Kugelführung liegende Lichtschranke. Bleibt die Kugel 2 hingegen stecken, so passiert diese zwar die im Auslass 23 der Hebeeinrichtung 20 befindliche Lichtschranke, jedoch nicht die am Ende der Kugelführung 1 gelegene Lichtschranke. Zur Feststellung, ob eine Kugel steckengeblieben ist, kann somit wie folgt vorgegangen werden: Nachdem eine der Kugeln 2 die im oberen Auslass 23 der Hebeeinrichtung 20 befindliche Lichtschranke durchquert hat, wird eine Zeitgebereinheit gestartet und nachdem die Kugel die Lichtschranke am Ende der Kugelführung 1 durchquert hat, wird die Zeitgebereinheit angehalten und rückgesetzt. Überschreitet der vom Zeitgeber angegebene Wert einen vorgegebenen Schwellenwert, so gilt die Kugel als steckengeblieben und die Einheit zur Feststellung einer feststeckenden Kugel 2 gibt ein entsprechendes elektronisches Signal an den Vibrationsgeber 11 ab. Der Vibrationsgeber 11 wird aktiviert und versetzt die Kugelführung in Vibration, sodass sich die Kugel aus ihrer festgefahrenen Lage löst und entlang der Kugelführung 1 weiterlaufen kann. Die Kugel 2 passiert folglich die im Endbereich der Kugelführung 1 gelegene Lichtschranke, woraufhin der Zeitgeber angehalten und rückgesetzt wird. Fortan gibt die Einheit kein Signal mehr an den Vibrationsgeber 11 ab, der Vibrationsgeber 11 wird deaktiviert und die nächste Kugel 2 kann gezogen werden.

Der Vibrationsgeber kann alternativ auch in einem gleichförmigen oder gepulsten Dauerbetrieb betrieben werden, wodurch eine Feststellung des Steckenbleibens von Kugeln entfallen kann.

Die Vibrationsamplitude wird so gewählt, dass die Vibration nicht mit freiem Auge wahrnehmbar ist und insbesondere nicht hörbar ist.

Alternativ kann auch eine Vielzahl von Streben 16 vorgesehen sein, an denen jeweils ein Vibrationsgeber 11 angeordnet ist, wobei Schwingungen oder Vibrationen auf unterschiedliche Teilbereiche der Kugelführung 1 übertragen werden.

Alternativ zur Ausbildung als Stützkonstruktion mittels Strebe(n) 16 kann eine Hängekonstruktion mittels Hängestangen zur Halterung der Kugelführung 1 vorgesehen sein. Diese Hängekonstruktion kann etwa an der Abdeckung 35 montiert sein.

Anstelle des Elektromotors als Vibrationsgeber 11 kann auch noch ein Elektromagnet verwendet werden, der mit elektromagnetischen Kräften, welche zwischen einer Schwingspule und einem magnetischen Vibrationselement erzeugt werden, wobei das magnetische Vibrationselement aus einem Joch und einem Magneten besteht, wenn der Schwingspule Wechselstrom zugeführt wird. Solche elektrischen Vibrationselemente wurden über lange Zeit hinweg in elektromagnetischen Klingeln eingesetzt. Es wäre alternativ auch möglich, eine elektromagnetische Klingel derart zu modifizieren, dass der Hammer auf die Strebe 16 schlägt. Durchsetzt die Strebe 16 wie im vorliegenden Fall das Gehäuse des Vibrationsgebers kann der Hammer im Inneren des Gehäuses auf die Strebe 16 einwirken, sodass Schwingungen auf die Kugelführung übertragen werden.

## Patentansprüche

1. Kugelziehungsautomat umfassend
- eine Ziehungseinheit (3) zur Aufnahme und zufälligen Auswahl von Kugeln (2) sowie
- zumindest eine Kugelführung (1) zur Abführung von gezogenen Kugeln (2) aus der oder zur Zuführung von Kugeln (2) zur Ziehungseinheit (3),
- wobei die Kugelführung (1) einen Körper (10) zur Aufnahme und Führung von Kugeln (2) einer vorgegebenen Größe entlang eines vom Körper (10) definierten, vorgegebenen Wegs (12) aufweist,
- wobei der Körper (10) eine Anzahl von entlang des vorgegebenen Wegs (12) verlaufenden, zueinander beabstandeten, insbesondere gekrümmten, Führungsstangen (13) aufweist, die den vorgegebenen Weg (12) derart umgeben, dass zwischen den Führungsstangen (13) eine Kugel (2) der vorgegebenen Größe entlang des vorgegebenen Wegs (12) führbar ist, und
- wobei die Führungsstangen (13) parallel zueinander verlaufen und den vorgegebenen Weg (12) festlegen, und
- wobei die Führungsstangen (13) an einer Anzahl von längs des vorgegebenen Wegs (12) vorgegebenen, insbesondere gleichmäßig, entlang des vorgegebenen Wegs (12) beabstandeten Positionen (14) durch Querverbindungen (15) zueinander festgehalten sind, wobei die Querverbindungen (15) vorzugsweise eine zentrale Ausnehmung zur Durchführung einer Kugel (2) aufweisen, **dadurch gekennzeichnet, dass**
- die Kugelführung zumindest einen Vibrationsgeber (11) umfasst, der mit dem Körper (10) schwingungsübertragend verbunden ist, und
- dass der Vibrationgeber (11) mit einer Strebe (16) schwingungsübertragend verbunden ist und die Strebe (16) mit dem Körper (10) verbunden ist wobei
- die Strebe (16) mit einer der Führungsstangen (13) oder einer der Querverbindungen (15) verbunden ist und diese durchsetzt.

2. Kugelziehungsautomat nach Anspruch 1, **dadurch gekennzeichnet, dass** der Vibrationsgeber (11) durch einen Exzentermotor oder Unwuchtmotor (110) ausgebildet ist, wobei vorzugsweise an der Achse (112) des Exzentermotors oder Unwuchtmotors (110) an dessen Abtriebswelle (112) ein Extentergewicht (111) angeordnet ist.

3. Kugelziehungsautomat nach einem der vorangehenden Ansprüche, **dadurch gekennzeichnet dass** der Vibrationsgeber (11) oder der Schwingteil (111) des Vibrationsgebers (11) mit der Strebe (16) schwingungsübertragend verbunden ist.

4. Kugelziehungsautomat nach einem der vorangehenden Ansprüche, **gekennzeichnet durch** eine Einheit zur Feststellung einer in der Kugelführung steckengebliebenen Kugel (2), wobei die Einheit bei Feststellung einer steckengebliebenen Kugel (2) den Vibrationsgeber aktiviert.

5. Kugelziehungsautomat nach einem der vorangehenden Ansprüche, **dadurch gekennzeichnet, dass** der Vibrationsgeber (11) auf eine Frequenz eingestellt ist, die der Resonanzfrequenz (fR) der Kugelführung (1) entspricht.

6. Kugelziehungsautomat nach einem der vorangehenden Ansprüche, **dadurch gekennzeichnet, dass** die Strebe (16) aus Metall besteht.

7. Kugelziehungsautomat nach einem der vorangehenden Ansprüche, **dadurch gekennzeichnet, dass** die Ziehungseinheit (3) als Ziehungstrommel ausgebildet ist.

## Claims

1. A ball drawing machine comprising
- a drawing unit (3) for the reception and random selection of balls (2) as well as
- at least one ball guide (1) for discharging drawn balls (2) from the drawing unit (3) or for feeding balls (2) to it
- wherein the ball guide (1) has a body (10) for the reception and guiding of balls (2) of a predetermined size along a predetermined path (12) defined by the body (10),
- wherein the body (10) has a number of guide rods running along the predetermined path (12), spaced apart from each other, in particular curved, which surround the predetermined path (12) in such a way that between the guide rods (13) a ball (2) of predetermined size can be guided along the predetermined path (12), and
- wherein
the guide rods (13) run parallel to each other and define the predetermined path (12), and
- wherein
the guide rods (13) are held to each other by cross-connections (15) at a number of positions predetermined along the predetermined path (12), in particular uniformly, spaced apart along the predetermined path (12), wherein the cross-connections (15) preferably have a central recess for the feed-through of a ball (2), **characterized in that**
- the ball guide comprises at least one vibration generator (11), which is connected to the body (10) in a vibration-transmitting manner, and
- that the vibration generator (11) is connected to a strut (16) in a vibration-transmitting manner and the strut (16) is connected to the body (10), wherein
- the strut (16) is connected to one of the guide rods (13) or one of the cross-connections (15) and passes through the latter.

2. A ball drawing machine according to claim 1, **characterized in that** the vibration generator (11) is formed by an eccentric motor or unbalanced motor (110), wherein preferably an eccentric weight (111) is arranged on the axis (112) of the eccentric motor or unbalanced motor (110) on its output shaft (112).

3. A ball drawing machine according to one of the preceding claims, **characterized in that** the vibration generator (11) or the vibratory part (111) of the vibration generator (11) is connected to the strut (16) in a vibration-transmitting manner.

4. A ball drawing machine according to one of the preceding claims, **characterized by** a unit for ascertainment of a ball (2) stuck in the ball guide, wherein the unit upon ascertainment of a stuck ball (2) activates the vibration generator.

5. A ball drawing machine according to one of the preceding claims, **characterized in that** the vibration generator (11) is set at a frequency, which corresponds to the resonance frequency (fR) of the ball guide (1).

6. A ball drawing machine according to one of the preceding claims, **characterized in that** the strut (16) consists of metal.

7. A ball drawing machine according to one of the preceding claims, **characterized in that** the drawing unit (3) is designed as a drawing drum.

## Revendications

1. Machine automatique de tirage de boules, comprenant :
- une unité de tirage (3) destinée à la réception et à la sélection aléatoire de boules (2), et
- au moins un guidage de boules (1) destiné à l'évacuation de boules (2) tirées en dehors de l'unité de tirage (3) ou à l'amenée de boules (2) dans l'unité de tirage (3), dans laquelle le guidage de boules (1) présente un corps (10) destiné à recevoir et à guides des boules (2) d'une taille prédéfinie le long d'une trajectoire prédéfinie (12) définie par le corps (10),
dans laquelle le corps (10) présente une pluralité de tiges de guidage (13) s'étendant le long de la trajectoire prédéfinie (12), à distance l'une de l'autre, en particulier courbées, qui délimitent la trajectoire prédéfinie (12) de telle sorte qu'une boule (2) de la taille prédéfinie peut être guidée le long de la trajectoire prédéfinie (12) entre les tiges de guidage (13), et
dans laquelle les tiges de guidage (13) s'étendent parallèlement l'une à l'autre et créent la trajectoire prédéfinie (12),
et
dans laquelle
les tiges de guidage (13) sont maintenues l'une avec l'autre au moyen de jonctions transversales (15) dans une pluralité de positions (14) prédéfinies le long de la trajectoire prédéfinie (12) à distance l'une de l'autre, en particulier régulière, le long de la trajectoire prédéfinie (12), les jonctions transversales (15) présentant de préférence un évidement central pour le passage d'une boule (2),
**caractérisée**
- **en ce que** le guidage de boules comprend au moins un vibreur (11), qui est relié avec le corps (10) de façon à transmettre les oscillations, et
- **en ce que** le vibreur (11) est relié avec une tringle (16) de façon à transmettre les oscillations et la tringle (16) est reliée avec le corps (10),
la tringle (16) étant reliée avec l'une des tiges de guidage (13) ou l'une des jonctions transversales (15) et passant à travers celle-ci.

2. Machine automatique de tirage de boules selon la revendication 1, **caractérisée en ce que** le vibreur (11) est constitué par un moteur à excentrique ou un moteur à balourds (110), une masse excentrique (111) étant de préférence agencée sur l'axe (112) du moteur à excentrique ou du moteur à balourds (110) au niveau de son arbre de sortie (112).

3. Machine automatique de tirage de boules selon l'une des revendications précédentes, **caractérisée en ce que** le vibreur (11) ou l'élément oscillant (111) du vibreur (11) est relié avec la tringle (16) de façon à transmettre les oscillations.

4. Machine automatique de tirage de boules selon l'une des revendications précédentes, **caractérisée par** une unité destinée à déterminer qu'une boule (2) est restée coincée dans le guidage de boules, l'unité activant le vibreur lorsqu'elle détermine qu'une boule (2) est restée coincée.

5. Machine automatique de tirage de boules selon l'une des revendications précédentes, **caractérisée en ce que** le vibreur (11) est réglé à une fréquence qui correspond à la fréquence de résonance (fR) du guidage de boules (1).

6. Machine automatique de tirage de boules selon l'une des revendications précédentes, **caractérisée en ce que** la tringle (16) est réalisée en métal.

7. Machine automatique de tirage de boules selon l'une des revendications précédentes, **caractérisée en ce que** l'unité de tirage (3) est réalisée en tant que tambour de tirage.
